(19) Europäisches Patentamt
European Patent Office
Office européen des brevets

(11) Numéro de publication: **0 012 053**
**B1**

# (12) FASCICULE DE BREVET EUROPEEN

(45) Date de publication du fascicule de brevet: **17.02.82**

(21) Numéro de dépôt: **79400852.4**

(22) Date de dépôt: **13.11.79**

(51) Int. Cl.³: **C 09 B 44/18**, C 09 B 67/34, D 06 P 1/08, C 09 B 69/06, C 07 D 249/00

(54) **Solutions aqueuses concentrées de colorant cationique, leur procédé de préparation et leur utilisation.**

(30) Priorité: **30.11.78 FR 7833782**
**13.02.79 FR 7903588**

(43) Date de publication de la demande: **11.06.80 Bulletin 80/12**

(45) Mention de la délivrance du brevet: **17.02.82 Bulletin 82/7**

(84) Etats contractants désignés: **BE CH DE FR GB IT NL**

(56) Documents cités:
**CH-A-470 464**
**FR-A-1 526 596**
**FR-A-1 583 043**
**FR-A-2 081 788**
**FR-A-2 290 479**
**US-A-3 438 963**
**US-A-4 063 889**

(73) Titulaire: **P C U K PRODUITS CHIMIQUES UGINE KUHLMANN, Service Propriété Industrielle Tour Manhattan, F-92087 PARIS LA DEFENSE 2 Cédex 21 (FR)**

(72) Inventeur: **Durant, Marcel Raymond Roger, 53, rue Jacques Boutrolle, F-76130 Mont Saint Aignan (FR)**

(74) Mandataire: **Leboulenger, Jean et al, PRODUITS CHIMIQUES UGINE KUHLMANN Service Propriéte Industrielle Tour Manhattan, F-92087 Paris La Défense Cedex 21 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 012 053 B1

BUNDESDRUCKEREI BERLIN

# Solutions aqueuses concentrées de colorant cationique, leur procédé de préparation et leur utilisation

La présente invention, faite dans les services de la demanderesse, concerne de nouvelles solutions concentrées aqueuses de colorant cationique, utilisables pour la teinture ou l'impression des fibres possèdant des groupes acides, particulièrement des fibres acryliques, et leur procédé de préparation.

Le développement de la coloration des fibres acryliques, principalement celui des techniques d'application à la continue, conduit à l'utilisation de plus en plus importante de solutions concentrées de colorants cationiques. La préparation de solutions concentrées stables, qui ne précipitent pas ou ne se troublent pas lors de leur conservation ou lors de leur mélange entre elles, est donc d'un grand intérêt. Le mélange de solutions concentrées de préparations différentes ou de diverses provenances conduit souvent à une incompatibilité qui se traduit par un changement de forme de la solution, soit par précipitation de l'un des constituants, soit par gélification de la solution, ce changement de forme rendant la solution impropre à l'usage auquel elle était destinée.

Cette incompatibilité est souvent rencontrée lorsque l'on utilise les solutions concentrées du colorant de formule:

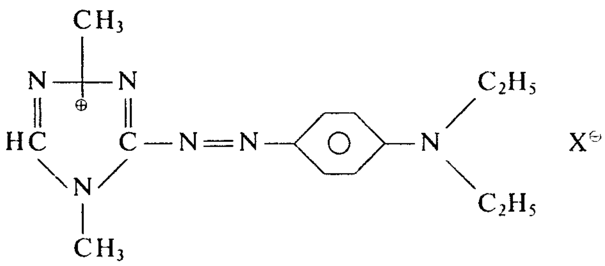

(I)

où $X^{\ominus}$ représente un anion. Ce colorant est connu sous forme de chlorure, de sulfométhylate, de chlorozincate et de tétrafluoroborate.

Ainsi, le fait de mélanger une solution aqueuse acide d'un colorant de formule générale:

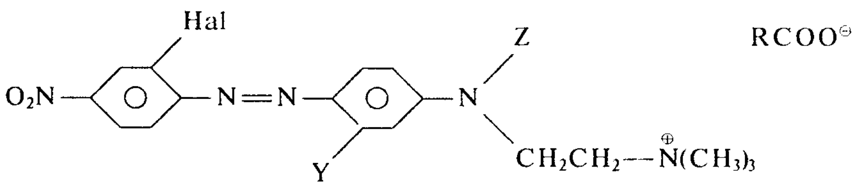

(II)

dans laquelle Hal représente un atome de chlore ou de brome, Y un atome d'hydrogène ou un radical méthyle, Z un radical méthyle ou éthyle et R un atome d'hydrogène ou un radical méthyle ou éthyle, avec une solution concentrée du colorant de formule (I) où $X^{\ominus}$ est l'anion chlorure, sulfométhylate, chlorozincate ou tétrafluoroborate, dans un rapport en poids 80/20, conduit à une précipiration du colorant de formule (II).

De même, le fait de mélanger une solution aqueuse acide du colorant de formule:

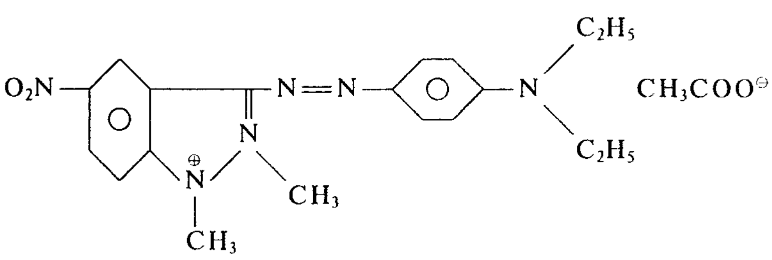

(III)

avec une solution concentrée du colorant de formule (I) où $X^{\ominus}$ est l'anion chlorure, sulfométhylate, chlorozincate ou tétrafluoroborate, dans un rapport en poids 90/10, conduit à une précipitation du colorant (III).

Les solutions concentrées obtenues conformément au procédé de la demande de brevet français 2 081 788 qui consiste à effectuer la quaternisation par le sulfate de diméthyle en présence d'oxyde de magnésium dans une cétone aliphatique, puis à ajouter de l'eau et un acide carboxylique aliphatique jusqu'à pH inférieur à 5 et à chasser le solvant organique par entraînement à la vapeur d'eau, contiennent des anions sulfométhylate et par suite présentent les inconvénients précités. Il en est de même des solutions concentrées du brevet français 1 583 043, préparées par dissolution directe du chlorozincate (exemple 16) dans une solution aqueuse concentrée d'un acide monocarboxylique tel que l'acide acétique.

La préparation des formiates, acétates ou propionates de certains colorants basiques est connue. Elle fait appel à l'isolement de la base, de l'hydroxyde, du carbonate ou du bicarbonate du colorant puis à la mise en solution dans l'acide formique, acétique ou propionique du produit isolé (brevet suisse 470 464). Cette technique ne convient pas cependant dans le cas du colorant (I), l'isolement de ce colorant sous l'une des formes précitées ne pouvant pas être effectué en raison de l'instabilité ou de la trop grande solubilité des produits formés.

Dans la demande de brevet français 2 290 479 est décrit un procédé de préparation de solutions de sels de colorants cationiques d'acides carboxyliques aliphatiques inférieurs qui consiste à faire réagir un halogénure de colorant cationique avec un acide carboxylique en présence d'un composé époxy. Les solutions ainsi obtenues contiennent toujours un halogéno-alcool provenant de la réaction de l'anion halogénure initial avec le composé époxy.

Il a maintenant été trouvé de manière inattendue que l'on peut préparer une solution concentrée de formiate, d'acétate ou de propionate du colorant (I) dans un mélange composé exclusivement d'eau et d'acide formique, acétique ou propionique, en précipitant le m- ou p-nitrobenzoate du colorant (I), puis en dissolvant ce sel dans l'acide formique, acétique ou propionique et enfin en séparant par filtration l'acide m- ou p-nitrobenzoïque précipité.

Ce résultat est d'autant plus surprenant que, s'il est connu que l'on peut déplacer un acide faible de ses sels par un acide fort, il était imprévisible que ce déplacement puisse être effectué quantitativement par un acide plus faible. Ce procédé ne peut d'ailleurs pas être généralisé aux autres colorants basiques.

L'invention a donc pour objet un procédé de préparation de solutions concentrées aqueuses du colorant de formule:

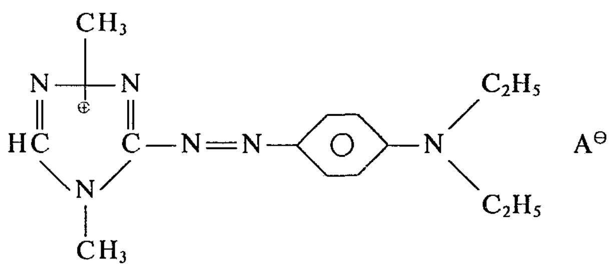

(IV)

où $A^{\ominus}$ représente l'anion formiate, acétate ou propionate, caractérisé en ce que l'on forme et isole intermédiairement le m- ou p-nitrobenzoate du colorant, puis dissout ce nitrobenzoate dans l'acide formique, acétique ou propionique et sépare l'acide m- ou p-nitrobenzoïque qui a précipité.

Comme acide nitrobenzoïque, on utilise de préférence l'acide paranitrobenzoïque pour des raisons économiques. La précipitation du nitrobenzoate s'effectue à partir de solutions aqueuses concentrées de chlorure ou, de préférence, de sulfométhylate du colorant (I). Ces solutions peuvent être obtenues par les méthodes usuelles, notamment celles décrites dans les brevets français 1 147 751 et 2 081 788.

Le procédé selon l'invention est de préférence réalisé de la manière suivante:

On coule une solution aqueuse d'acide m- ou p-nitrobenzoïque contenant de 30 à 120 g d'acide nitrobenzoïque par litre d'eau, de préférence de 50 à 100 g par litre d'eau, dans une solution aqueuse concentrée de chlorure ou de sulfométhylate du colorant (I) contenant de 0,5 à 1,1 mole de colorant par kg de solution, de préférence de 0,7 à 1 mole par kg.

La quantité d'acide nitrobenzoïque à utiliser peut varier de 0,4 à 1 kg, de préférence de 0,5 à 0,8 kg par mole de colorant (I).

En fin de précipitation du nitrobenzoate, le pH doit être compris entre 4,5 et 6, de préférence entre 5 et 5,5. Une manière avantageuse d'opérer consiste à dissoudre l'acide nitrobenzoïque dans l'eau par addition d'hydroxyde de sodium, puis à abaisser le pH jusqu'à environ 6 par addition d'un acide organique, de préférence l'acide dont on veut former le sel. L'acidité des solutions concentrées du colorant (I) suffit alors à obtenir le pH désiré.

Le nitrobenzoate précipité est isolé par filtration. On obtient une pâte de nitrobenzoate, dont l'extrait sec est compris entre 30% et 60%, de préférence entre 40% et 50%, et que l'on dissout dans de l'acide formique, acétique ou propionique selon l'anion que l'on veut obtenir. La quantité d'acide acétique, propionique ou formique peut varier de 5 à 18 moles par mole de colorant engagé, de préférence de 8 à 12 moles.

Après dissolution du colorant, éventuellement favorisée par un léger chauffage (température inférieure à 60° C), on précipite l'acide nitrobenzoïque par refroidissement à une température comprise entre −5° C et +5° C, de préférence entre −3° C et 0° C. Après filtration du mélange pour éliminer l'acide nitrobenzoïque précipité qui peut être réutilisé dans une opération ultérieure, on obtient une solution aqueuse acide du colorant (IV).

Grâce au procédé selon l'invention, il est maintenant possible de préparer des solutions concentrées aqueuses contenant de 2,5 à 9 moles d'acide formique, acétique ou propionique et de 0,4 à 0,8 mole de colorant (IV) par kg de solution.

Ces solutions concentrées sont stables et peuvent être utilisées pour la teinture des fibres portant des groupes acides, principalement des fibres acryliques.

Elles peuvent aussi être diluées par addition d'autres acides carboxyliques aliphatiques et/ou d'alcools aliphatiques tels que l'isopropanol, et/ou d'adjuvants de teinture ou d'impression, tels que des polyalcools solubles dans l'eau, leurs éthers ou leurs esters.

En mélange avec les solutions de colorants (II) et (III), les solutions concentrées selon l'invention donnent des solutions qui restent limpides, même après un stockage de 10 jours à 0°C, cette durée étant très supérieure à celle industriellement nécessaire pour la mise en œvre des mélanges de solutions concentrées lors des opérations de teinture ou d'impression.

Les exemples suivants dans lesquels les parties et les pourcentages sont exprimés en poids illustrent l'invention sans la limiter.

## Exemple 1

On dissout 13,8 parties d'acide paranitrobenzoïque dans 180 parties d'eau par addition de 10,3 parties de soude à 35° Bé. Après nise en solution, on ajuste le pH à 6 par addition de 7 parties d'acide acétique à 10%. La solution d'acide paranitrobenzoïque ainsi obtenue est ensuite introduite en une heure dans 33,5 parties d'une solution de sulfométhylate du colorant (I) contenant 0,7 mole de colorant par kg. Après avoir agité pendant deux heures, on isole par filtration le paranitrobenzoate qui a précipité. On obtient 37 parties de pâte à 42% d'extrait sec.

On dissout cette pâte dans 12,7 parties d'acide acétique glacial en chauffant à 50° C et en brassant pendant une heure. Après refroidissement à −2° C, puis filtration, on obtient 38 parties d'une solution d'acétate du colorant (IV) contenant 0,5 mole de colorant par kg. Rendement: 81%.

## Exemple 2

On opère comme à l'exemple 1 mais en remplaçant l'acide paranitrobenzoïque par l'acide métanitrobenzoïque. On obtient le même résultat.

## Exemple 3

On dissout 13,8 parties d'acide paranitrobenzoïque dans 180 parties d'eau par addition de 10,3 parties de soude à 35° Bé. Après mise en solution on ajuste le pH à 6 par addition de 0,7 partie d'acide formique 80%. La solution d'acide p-nitrobenzoïque obtenue est ensuite introduite en une heure dans 36,4 parties d'une solution de sulfométhylate du colorant (I) contenant 0,65 mole de colorant par kg. Après avoir agité pendant deux heures, on isole par filtration le paranitrobenzoate qui a précipité. On obtient 37 parties de pâte à 42% d'extrait sec.

On dissout cette pâte dans 16,5 parties d'acide formique 80% en chauffant à 50° C et en brassant pendant une heure. Après refroidissement à −2° C, puis filtration, on obtient 41,6 parties d'une solution de formiate du colorant (IV) contenant 0,45 mole de colorant par kg. Rendement: 79%.

## Exemple 4

On opère comme à l'exemple 3 mais en remplaçant l'acide paranitrobenzoïque par l'acide métanitrobenzoïque. On obtient le même résultat.

## Exemple 5

On dissout 13,8 parties d'acide paranitrobenzoïque dans 180 parties d'eau par addition de 10,3 parties de soude à 35° Bè. Après mise en solution on ajuste le pH à 6 par addition de 0,9 partie d'acide propionique. La solution d'acide p-nitrobenzoïque obtenue est ensuite introduite en une heure dans 36,4 parties d'une solution de sulfométhylate du colorant (I) contenant 0,65 mole de colorant par kg. Après avoir agité pendant deux heures, on isole par filtration le p-nitrobenzoate qui a précipité. On obtient 37 parties de pâte à 42% d'extrait sec.

On dissout cette pâte dans 14 parties d'acide propionique en chauffant à 50° C et en brassant pendant une heure. Après refroidissement à −3° C puis filtration, on obtient 40,6 parties d'une solution de propionate de colorant (IV) contenant 0,45 mole de colorant par kg. Rendement: 77,2%.

**Revendications**

1. Les solutions concentrées du colorant de formule:

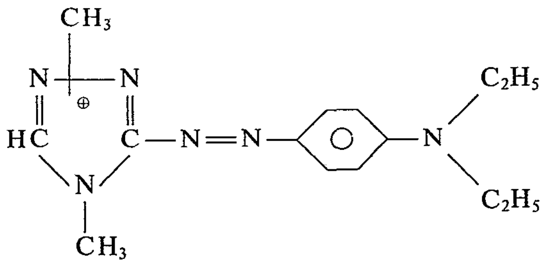

$A^{\ominus}$ (IV)

dans laquelle $A^{\ominus}$ reprrésente l'anion $HCOO^{\ominus}$, $CH_3COO^{\ominus}$ ou $CH_3CH_2COO^{\ominus}$, dans un mélange composé exclusivement d'eau et d'acide formique, acétique ou propionique, ces solutions étant pratiquement exemptes d'autres anions que ceux d'acides carboxyliques aliphatiques.

2. Solutions selon la revendication 1 caractérisés en ce qu'elles comprennent 0,4 à 0,8 mole de colorant (IV) et de 2,5 à 9 moles d'acide formique, acétique ou propionique par kg de solution.

3. Procédé pour la préparation de solutions concentrées du colorant de formule:

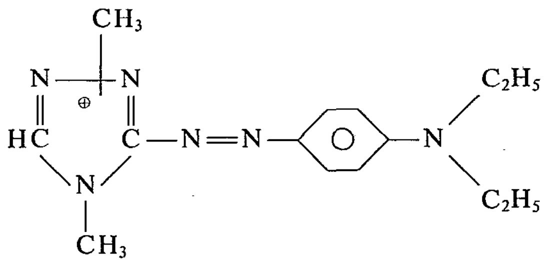

$A^{\ominus}$ (IV)

dans laquelle $A^{\ominus}$ représente l'anion $HCOO^{\ominus}$, $CH_3COO^{\ominus}$ ou $CH_3CH_2COO^{\ominus}$, caractérisé en ce que, à partir d'une solution aqueuse concentrée du colorant de formule:

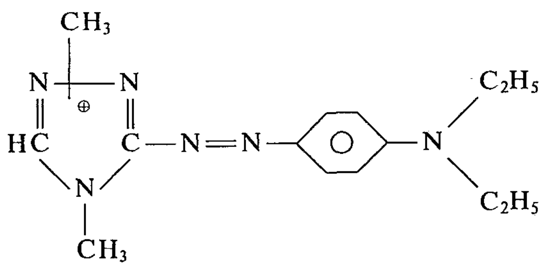

$X^{\ominus}$ (I)

dans laquelle $X^{\ominus}$ est l'anion chlorure ou sulfométhylate, on forme et isole le m- ou p-nitrobenzoate correspondant, puis dissout ce nitrobenzoate dans l'acide formique, acétique ou propionique et sépare l'acide m- ou p-nitrobenzoïque qui a précipité.

4. Procédé selon la revendication 3 caractérisé en ce que l'on traite la solution concentrée de colorant (I) par une solution aqueuse d'acide m- ou p-nitrobenzoïque, filtre le nitrobenzoate formé, dissout la pâte de nitrobenzoate ainsi obtenue dans l'acide formique, acétique ou propionique et élimine par filtration le précipité d'acide nitrobenzoïque.

5. Procédé selon la revendication 4 caractérisé en ce que l'on utilise l'acide p-nitrobenzoïque.

6. Procédé selon la revendication 4 ou 5 caractérisé en ce que l'on utilise le sulfométhylate du colorant (I).

7. Procédé selon l'une des revendications 4, 5 et 6 caractérisé en ce que la solution aqueuse d'acide nitrobenzoïque contient 30 à 120 g, de préférence 50 à 100 g, d'acide par litre d'eau et la solution du colorant (I) contient 0,5 à 1,1 mole, de préférence 0,7 à 1 mole, de colorant par kg de solution, la quantité d'acide nitrobenzoïque utilisée par mole de colorant allant de 0,4 à 1 kg, de préférence de 0,5 à 0,8 kg.

8. Procédé selon l'une des revendications 4 à 7 caractérisé en ce que la pâte de nitrobenzoate a un extrait sec compris entre 30 et 60%, de préférence entre 40 et 50% en poids.

9. Procédé selon l'une des revendications 4 à 8 caractérisé en ce que l'on dissout l'acide nitrobenzoïque dans l'eau au moyen d'hydroxyde de sodium et amène le pH de cette solution jusqu'à environ 6.

10. Procédé selon l'une des revendications 4 à 9 caractérisé en ce que la dissolution du nitrobenzoate

dans l'acide formique, acétique ou propionique est réalisée en chauffant à une température inférieure à 60° C, le mélange étant ensuite refroidi à une température comprise entre −5 et +5° C.

11. Procédé selon l'une des revendications 4 à 10 caractérisé en ce que l'on utilise 5 à 18 moles, de préférence 8 à 12 moles, d'acide formique, acétique ou propionique par mole de colorant (I).

12. Procédé selon l'une des revendications 3 à 11 caractérisé en ce que l'on ajoute à la solution concentrée obtenue d'autres acides carboxyliques aliphatiques et/ou des alcools aliphatiques et/ou des adjuvants de teinture ou d'impression.

13. L'utilisation des solutions concentrées préparées selon l'une des revendications 3 à 12 pour la teinture et l'impression des fibres contenant des groupes acides, en particulier des fibres acryliques.

**Patentansprüche**

1. Konzentrierte Lösungen des Farbstoffs folgender Formel:

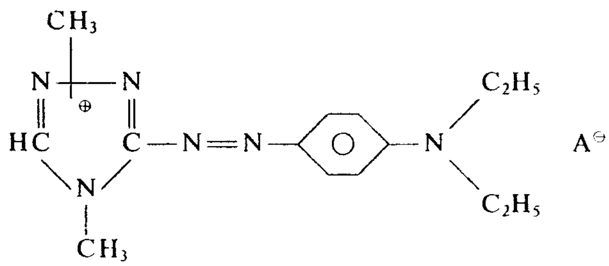

(IV)

in der $A^\ominus$ das Anion $HCOO^\ominus$, $CH_3COO^\ominus$ oder $CH_3CH_2COO^\ominus$ bedeutet, in einem Gemisch, das ausschließlich aus Wasser und Ameisensäure, Essigsäure oder Propionsäure zusammengesetzt ist, wobei diese Lösungen praktisch frei von anderen Anionen als denen von aliphatischen Carbonsäuren sind.

2. Lösungen gemäß Anspruch 1, dadurch gekennzeichnet, daß sie 0,4 bis 0,8 Mol des Farbstoffs (IV) und 2,5 bis 9 Mol Ameisensäure, Essigsäure oder Propionsäure pro kg Lösung enthalten.

3. Verfahren zur Herstellung von konzentrierten Lösungen des Farbstoffs der Formel:

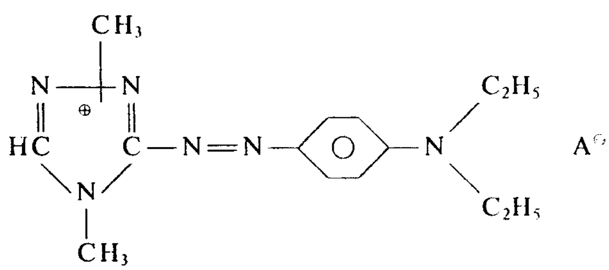

(IV)

in der $A^\ominus$ das Anion $HCOO^\ominus$, $CH_3COO^\ominus$ oder $CH_3CH_2COO^\ominus$ bedeutet, dadurch gekennzeichnet, daß man ausgehend von einer wäßrigen konzentrierten Lösung des Farbstoffs der Formel:

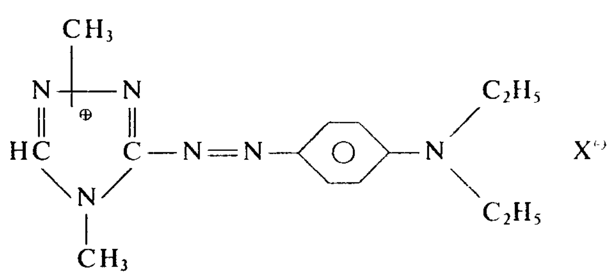

(I)

in der $X^\ominus$ das Chlorid- oder Sulfomethylatanion bedeutet, das entsprechende m- oder p-Nitrobenzoat bildet und isoliert, anschließend dieses Nitrobenzoat in Ameisensäure, Essigsäure oder Propionsäure auflöst und die abgeschiedene m- oder p-Nitrobenzoesäure abtrennt.

4. Verfahren nach Anspruch 3, dadurch gekennzeichnet, daß man die konzentrierte Lösung des Farbstoffs (I) mit einer wäßrigen Lösung von m- oder p-Nitrobenzoesäure behandelt, das gebildete Nitrobenzoat abfiltriert, das auf diese Weise erhaltene pastöse Nitrobenzoat in Ameisensäure, Essigsäure oder Propionsäure auflöst und durch Filtrieren die ausgefallene Nitrobenzoesäure eliminiert.

5. Verfahren nach Anspruch 4, dadurch gekennzeichnet, daß man p-Nitrobenzoesäure verwendet.

6. Verfahren nach Anspruch 4 oder 5, dadurch gekennzeichnet, daß man das Sulfomethylat des Farbstoffs (I) verwendet.

7. Verfahren nach einem der Ansprüche 4, 5 und 6, dadurch gekennzeichnet, daß die wäßrige Lösung der Nitrobenzoesäure 30 bis 120 g, vorzugsweise 50 bis 100 g, Säure pro Liter Wasser und die Lösung des Farbstoffs (I) 0,5 bis 1,1 Mol, vorzugsweise 0,7 bis 1 Mol, Farbstoff pro kg Lösung enthält, wobei die Menge der verwendeten Nitrobenzoesäure pro Mol des Farbstoffs von 0,4 bis 1 kg, vorzugsweise von 0,5 bis 0,8 kg, beträgt.

8. Verfahren nach einem der Ansprüche 4 bis 7, dadurch gekennzeichnet, daß das pastöse Nitrobenzoat einen Trockenauszug zwischen 30 und 60 Gewichtsprozent, vorzugsweise zwischen 40 und 50 Gewichtsprozent aufweist.

9. Verfahren nach einem der Ansprüche 4 bis 8, dadurch gekennzeichnet, daß man die Nitrobenzoesäure in Wasser mit Hilfe von Natriumhydroxid auflöst und den pH dieser Lösung auf etwa 6 einstellt.

10. Verfahren nach einem der Ansprüche 4 bis 9, dadurch gekennzeichnet, daß die Auflösung des Nitrobenzoats in Ameisensäure, Essigsäure oder Propionsäure dadurch erfolgt, daß man auf eine Temperatur unterhalb 60° C erwärmt und das Gemisch anschließend auf eine Temperatur zwischen −5 und +5° C abkühlt.

11. Verfahren nach einem der Ansprüche 4 bis 10, dadurch gekennzeichnet, daß man 5 bis 18 Mol, vorzugsweise 8 bis 12 Mol Ameisensäure, Essigsäure oder Propionsäure pro Mol des Farbstoffs (I) verwendet.

12. Verfahren nach einem der Ansprüche 3 bis 11, dadurch gekennzeichnet, daß man der erhaltenen konzentrierten Lösung andere aliphatische Carbonsäuren und/oder aliphatische Alkohole und/oder Färbe- oder Druckhilfsmittel zusetzt.

13. Verwendung der gemäß einem der Ansprüche 3 bis 12 hergestellten konzentrierten Lösungen zum Färben und Bedrucken von Fasern, die saure Gruppen enthalten, im besonderen von Acrylfasern.

**Claims**

1. The concentrated solutions of the dyestuff of the formula:

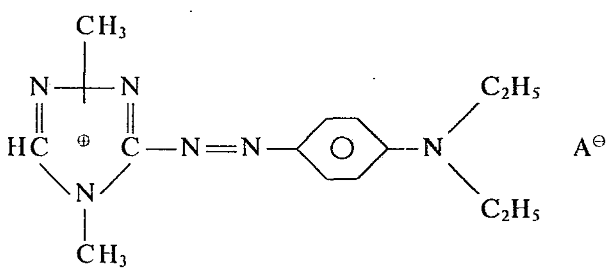

(IV)

in which $A^{\ominus}$ represents the $HCOO^{\ominus}$, $CH_3COO^{\ominus}$ or $CH_3CH_2COO^{\ominus}$ anion, in a mixture consisting exclusively of water and formic, acetic or propionic acid, said solutions being substantially free from other anions than those of aliphatic carboxylic acids.

2. Solutions according to claim 1, characterised in that they contain 0.4 to 0.8 mole of dyestuff (IV) and from 2.5 to 9 moles of formic, acetic or propionic acid per kg of solution.

3. Process for the preparation of concentrated solutions of the dyestuff of the formula:

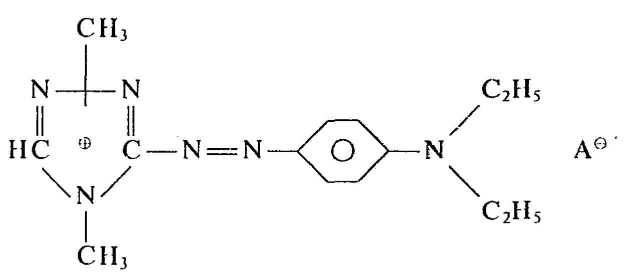

(IV)

in which $A^{\ominus}$ represents the $HCOO^{\ominus}$, $CH_3COO^{\ominus}$ or $CH_3CH_2COO^{\ominus}$ anion, characterised in that, from a concentrated aqueous solution of the dyestuff of the formula:

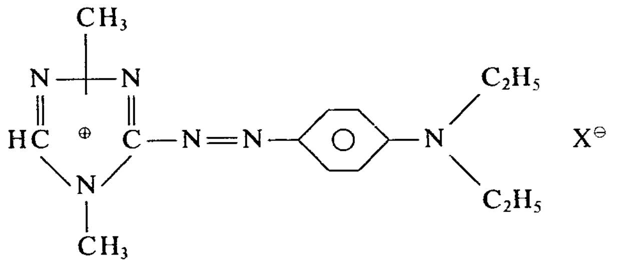

(I)

in which X⊖ ist the chloride or sulphomethylate anion, the corresponding m- or p-nitrobenzoate is formed and isolated, then said nitrobenzoate is dissolved in formic, acetic or propionic acid and the m- or p-nitrobenzoic acid which has precipitated is separated.

4. Process according to claim 3, characterised in that the concentrated solution of dyestuff (I) is treated with an aqueous solution of m- or p-nitrobenzoic acid, the nitrobenzoate thus formed is filtered, the nitrobenzoate paste thus obtained is dissolved in formic, acetic or propionic acid and the precipitate of nitrobenzoic acid is eliminated by filtration.

5. Process according to claim 4, characterised in that p-nitrobenzoic acid is used.

6. Process according to claim 4 or 5, characterised in that the sulphomethylate of dyestuff (I) is used.

7. Process according to one of claims 4, 5 and 6, characterised in that the aqueous solution of nitrobenzoic acid contains 30 to 120 g, preferably 50 to 100 g, of acid per litre of water and the solution of the dyestuff (I) contains 0.5 to 1.1 mole, preferably 0.7 to 1 mole, of dyestuff per kg of solution, while the quantity of nitrobenzoic acid which is used per mole of dyestuff ranges from 0.4 to 1 kg, preferably from 0.5 to 0.8 kg.

8. Process according to one of claims 4 to 7, characterised in that the dry extract of the nitrobenzoate paste is between 30 and 60%, preferably between 40 and 50% by weight.

9. Process according to one of claims 4 to 8, characterised in that the nitrobenzoic acid is dissolved in water by means of sodium hydroxide and the pH of that solution is brought to about 6.

10. Process according to one of claims 4 to 9, characterised in that the dissolving of the nitrobenzoate in formic, acetic or propionic acid is effected by heating at a temperature lower than 60° C, the mixture being then cooled to a temperature between −5 and +5° C.

11. Process according to one of claims 4 to 10, characterised in that 5 to 18 moles, preferably 8 to 12 moles, of formic, acetic or propionic acid are used per mole of dyestuff (I).

12. Process according to one of claims 3 to 11, characterised in that other aliphatic carboxylic acids and/or aliphatic alcohols and/or dyeing or printing adjuvants are added to the concentrated solution obtained.

13. The use of the concentrated solutions prepared according to one of claims 3 to 12 for dyeing and printing fibres containing acid groups, particularly acrylic fibres.